# EUROPEAN PATENT APPLICATION

(11) **EP 2 461 600 A1**
(43) Date of publication of application: **06.06.2012**
(21) Application number: 11171479.6
(22) Date of filing: 27.06.2011
(51) Int. Cl.: H04N 21/431, H04N 21/8358, H04N 21/44, H04N 21/488

(54) **Image processing apparatus and control method thereof**

(30) Priority: 02.12.2010 KR 20100121809
(71) Applicant: Samsung Electronics Co., Ltd., Yeoungtong-gu Suwon-si, Gyeonggi-do (KR)
(72) Inventor: Kim, Dong-wook, Gyeonggi-do (KR); Im, Sang-kyun, Seoul (KR)
(74) Representative: Bruce, Alexander Richard Henry

(57) **Abstract**

An image processing apparatus includes an image receiver which receives an image content; an image processor which processes the image content received by the image receiver to be displayed on a display unit; a watermark detector which detects whether the image content processed by the image processor includes a watermark image; and a controller which controls the image processor to selectively limit display of the image content corresponding to whether the watermark image is detected in the image content by the watermark detector.

## Description

The present invention relates to an image processing apparatus which processes image content transmitted from an outside to be displayed and a control method thereof, and more particularly, to an image processing apparatus having a structure to prevent unauthorized acquisition and distribution of image content and a control method thereof.

An image processing apparatus processes image contents transmitted from an outside based on various processes, and displays processed images on a display panel provided therein or outputs the processed images to a different image processing apparatus to display the images. The image processing apparatus may be configured as a TV or monitor with a panel or as a set-top box without a panel.

With digitization of image content, a high-capacity storage medium, or development of a network transmission speed, unauthorized acquisition and distribution of image content becomes an issue in view of copyright. An example of unauthorized acquisition and distribution of image content is illustrated as follows. While image content is displayed on an image processing apparatus with authorization from a copyright holder of the image content, a third person without authorization to use the image content may acquire the displayed image content by recording with a camcorder or camera. Further, the acquired image content may be copied and distributed through the Internet or a USB memory.

Accordingly, rights of the copyright holder of the image content or a user which properly receives permission are infringed, and thus it is important to prevent unauthorized acquisition and distribution of the image content in order to protect the rights.

An aspect of an exemplary embodiments provides an image processing apparatus including: an image receiver which receives image content; an image processor which processes the image content received by the image receiver to be displayed on a display unit; a watermark detector which detects whether the image content processed by the image processor includes a watermark image; and a controller which controls the image processor to selectively limit display of the image content corresponding to whether the watermark image is detected in the image content by the watermark detector.

The controller may control the image processor to display the image content in order to include a preset watermark image if the watermark image is not detected in the image content.

The controller may generate the preset watermark image based on watermark related information including at least one of information about details of the image content, information about time and location in which the image content is displayed, and information about the image processing apparatus to process the image content to be displayed.

The controller may control the image processor not to display the image content on the display unit if the watermark image is detected in the image content.

The controller may display a warning message on the display unit if the watermark image is detected in the image content.

The image processing apparatus may further include a communication unit which is connected to a server via a network, and the controller may extract watermark related information from the detected watermark image and forward the extracted watermark related information to the server through the communication unit if the watermark image is detected in the image content.

The watermark detector may detect the watermark image displayed within an image frame of the image content.

The controller may determine that the image content includes the watermark image if the watermark detector detects that the image frame includes at least one preset image pattern.

An aspect of another exemplary embodiment provides a control method of an image processing apparatus, the control method including: processing image content received from an outside to be displayed; detecting whether the image content includes a watermark image; and selectively limiting display of the image content corresponding to whether the watermark image is detected in the image content.

The selectively limiting display of the image content corresponding to whether the watermark image is detected in the image content may include displaying the image content in order to include a preset watermark image if the watermark image is not detected in the image content.

The displaying the image content including the preset watermark image may include generating the preset watermark image based on watermark related information including at least one of information about details of the image content, information about time and location in which the image content is displayed, and information about the image processing apparatus to process the image content to be displayed.

The selectively limiting display of the image content corresponding to whether the watermark image is detected in the image content may include not displaying the image content if the watermark image is detected in the image content.

The selectively limiting display of the image content corresponding to whether the watermark image is detected in the image content may include displaying a warning message if the watermark image is detected in the image content.

The selectively limiting display of the image content corresponding to whether the watermark image is detected in the image content may include: extracting watermark related information from the detected watermark image if the watermark image is detected in the image content; and forwarding the extracted watermark related information to a server.

The detecting whether the image content includes the watermark image may include detecting the watermark image displayed within an image frame of the image content.

The detecting the watermark image displayed within the image frame of the image content may include determining that the image content includes the watermark image if the image frame is detected to include at least one preset image pattern.

The above and/or other aspects will become apparent and more readily appreciated from the following description of the exemplary embodiments, taken in conjunction with the accompanying drawings, in which:
FIG. 1 is a block diagram illustrating a configuration of an image processing apparatus according to a first exemplary embodiment;
FIG. 2 illustrates an example of displaying image content on which a watermark image is inserted into by the image processing apparatus of FIG. 1;
FIG. 3 illustrates an example of displaying a warning message by the image processing apparatus of FIG. 1;
FIG. 4 is a flowchart illustrating a control method of the image processing apparatus of FIG. 1; and
FIG. 5 is a block diagram illustrating a configuration of an image processing apparatus according to a second exemplary embodiment.

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity and conciseness, and like reference numerals refer to like elements throughout. Expressions such as "at least one of," when preceding a list of elements, modify the entire list and not the individual elements of the list

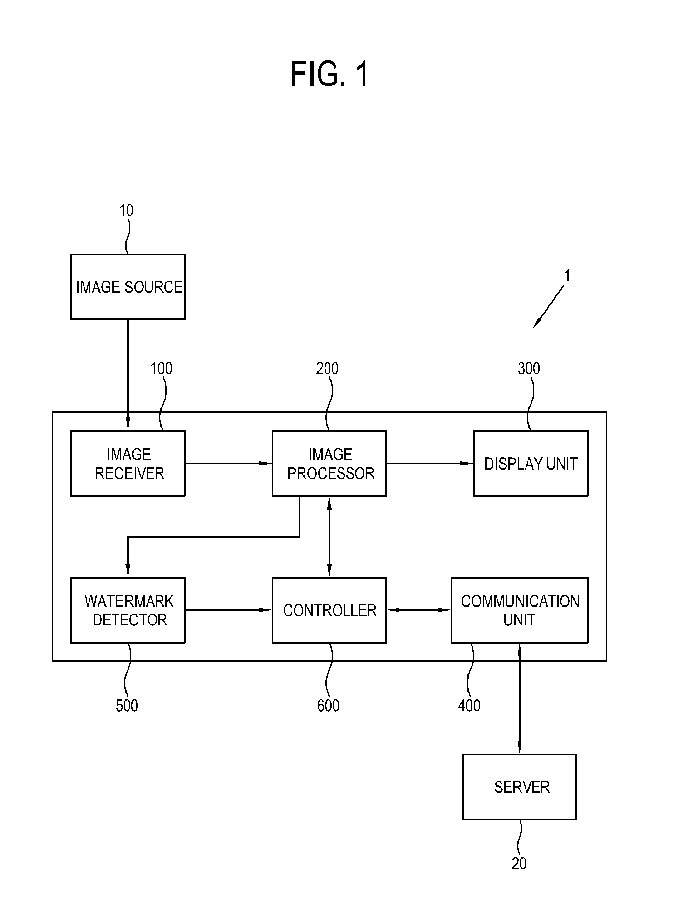

FIG. 1 is a block diagram illustrating a configuration of an image processing apparatus 1 according to a first exemplary embodiment.

In the present exemplary embodiment, the image processing apparatus 1 may be configured as a TV or a monitor including a display unit 300 to autonomously display images but is not limited thereto. The image processing apparatus 1 may be configured as a set-top box, a DVD player, a Blu-ray Disc™ (BD) player, or the like, which does not include the display unit 300 and transmits images to an external TV or monitor, including any device which is capable of processing image signals or image data transmitted from an outside or stored therein to be displayed.

As shown in FIG. 1, the image processing apparatus 1 includes an image receiver 100 to receive image content provided in a signal or packet from an external image source 10, an image processor 200 to process the image content received by the image receiver 100 to be displayed as an image, the display unit 300 to display the image content processed by the image processor 200, and a communication unit 400 connected to a server 20 via a network.

The image receiver 100 receives analog or digital image content in a wired or wireless manner from various image sources 10 as would be understood by those of ordinary skill in the art, and transmits the content to the image processor 200. The image receiver 100 may receive image contents in various standards based on types of the image sources 10. Here, the image sources 10 may be configured as any type which is capable of providing image content to the image receiver 100, for example, a main computer (not shown), a USB memory (not shown), compact disk (CD), digital versatile disc (DVD), or BD players (not shown), or the like.

When the image source 10 includes a server 20, the image receiver 100 receives image content from the server 20. In the drawings, the image receiver 100 and the communication unit 400 are illustrated as independent components, but the image receiver 100 and the communication unit 400 may be formed in a single body to transmit image content from the server 20 to the image processor 200 in alternative exemplary embodiments.

The image processor 200 performs various types of preset image processing on image content transmitted from the image receiver 100. The image processor 200 outputs processed image content to the display unit 300 so that an image is displayed on the display unit 300.

The image processor 200 may perform various types of image processing, for example, decoding corresponding to various image formats, de-interlacing, frame rate conversion, scaling, noise reduction to improve image quality, detail enhancement, and the like. The image processor 200 may be provided as a separate component to independently perform each process or an integrated component which is multi-functional, such as a system-on-chip.

The display unit 300 displays an image based on image content output from the image processor 200. The display unit 300 may be configured in various display types using liquid crystals, plasma, light emitting diodes, organic light emitting diodes, a surface conduction electron emitter, a carbon nano-tube, nano-crystals, or the like, but is not limited thereto.

The communication unit 400 connects the image processing apparatus 1 to the server 20 in a wired or wireless manner to communicate with each other via a network. The communication unit 400 enables two-way communication with the server 20, and transmits and receives unlimited information and data to and from the server 20.

With the above configuration, the image processing apparatus 1 displays image content received from the image sources 10 as an image. However, a third person who does not receive permission from a copyright holder of the image content may acquire without authorization, the image content displayed on the image processing apparatus 1.

For example, the third person may record an image of image content displayed on the image processing apparatus 1 using an image recording apparatus (not shown), such as a camcorder, a camera, or the like, to acquire data. The third person may distribute the data of the image content through a network, such as the Internet, or storage media (not shown), such as a USB memory, a hard disk drive (HDD), an optical disk drive (ODD), or the like.

Accordingly, the image content is acquired and distributed without authorization, to infringe rights of a copyright holder of the image content and the rights of users properly allowed to use the image content. Thus, according to the present exemplary embodiment, the image processing apparatus 1 prevents the above circumstance with the following configuration.

In the present exemplary embodiment, the image processing apparatus 1 includes a watermark detector 500 to detect whether image content processed by the image processor 200 includes a watermark image and a controller 600 to control the image processor 200 to selectively limit display of the image content corresponding to whether the watermark image is detected in the image content by the watermark detector 500.

The watermark detector 500 detects a watermark image appearing in an area within an image frame of image content processed by the image processor 200 to be displayed. For example, the watermark detector 500 pre-stores at least one image pattern corresponding to the watermark image and scans the image frame to determine whether there is the image pattern. If the watermark detector 500 detects that there is the image pattern in the image frame, the watermark detector 500 determines that the image content includes the watermark image. However, the above instance is just an illustrative example, and a method of the watermark detector 500 determining whether a watermark image is included in image content may be modified in various ways.

Further, a watermark image may appear in an area within an image frame of image content or be inserted as one image frame in image content.

The watermark detector 500 forwards a detection result to the controller 600.

The controller 600 determines whether image content includes a watermark image based on the detection result by the watermark detector 500. Then, the controller 600 performs a different operation corresponding to a determination result as follows.

If the image content is determined not to include the watermark image, the controller 600 determines that the image content is authorized. Accordingly, the controller 600 allows the image processor 200 to display the image content as an image on the display unit 300.

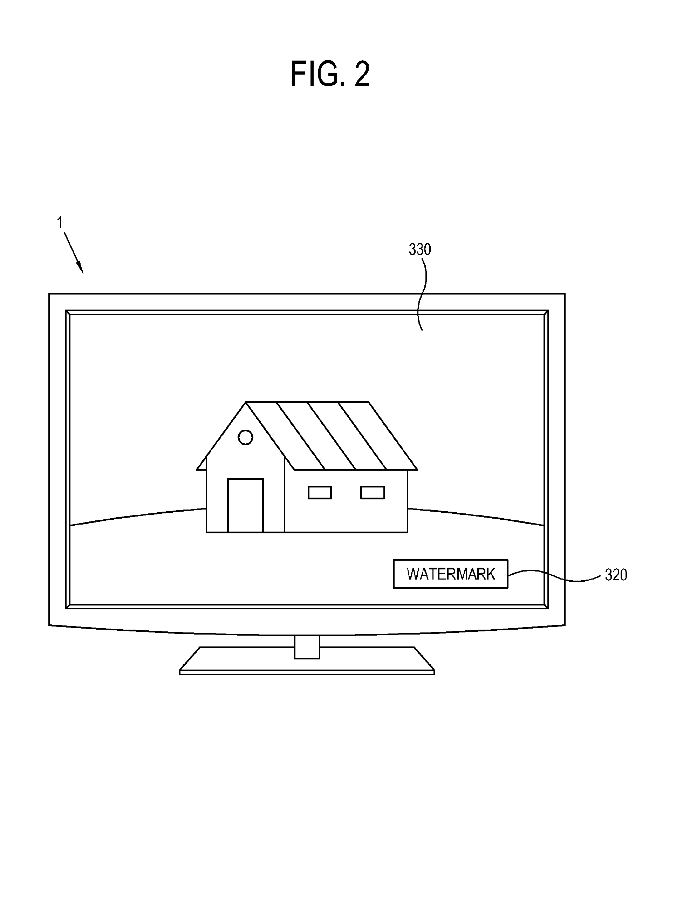

Here, the controller 600 generates a predetermined watermark image 320 based on preset watermark information and inserts the predetermined watermark image 320 into an image frame of the image content so that the image content includes the predetermined watermark image 320. The image processor 200 displays an image 330 of the image content, into which the predetermined watermark image 320 is inserted by the controller 600, on the display unit 300, shown in FIG. 2.

The preset watermark information may be of various forms and is not limited to the present exemplary embodiments. For example, the watermark information may include at least one of information about details of the image content, publisher information, information about time and location in which the image content is displayed, information about a model of the image processing apparatus 1, and information about an identification of the image processing apparatus 1.

If the image content is determined to include the watermark image, the controller 600 determines that the image content is unauthorized. Accordingly, the controller 600 limits proper display of the image content using various methods.

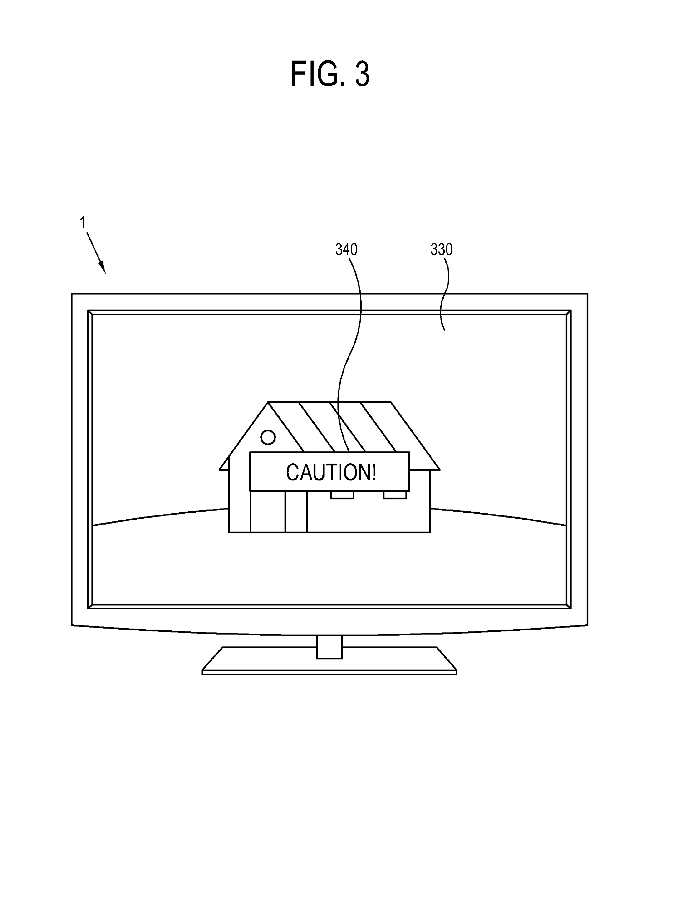

For example, the controller 600 may control the image processor 200 not to display the image content on the display unit 300. Alternatively, the controller 600 may warn a user by overlaying a warning message C on the image 330 of the image content, shown in FIG. 3. In addition, the controller 600 may display only the warning message 340 without displaying the image 330 of the image content.

Further, the controller 600 extracts watermark related information from the detected watermark image and transmits the extracted watermark related information to the communication unit 400. Accordingly, information about the unauthorized image content may be forwarded to the server 20 of a copyright holder or a rightful person.

As described above, according to the present exemplary embodiment, a watermark image is detected to determine whether the watermark image is included in image content provided from the image sources 10, and if the watermark image is detected, proper display of the image content is limited by various methods.

Further, if a watermark image is not detected, a watermark image is inserted into the image content to be displayed. Accordingly, when a third person who does not receive permission from a copyright holder of the image content acquires an image of the image content without authorization, the image processing apparatus 1 of the present exemplary embodiment may limit proper display of the image content.

With the above configuration, unauthorized acquisition and distribution of image content may be prevented.

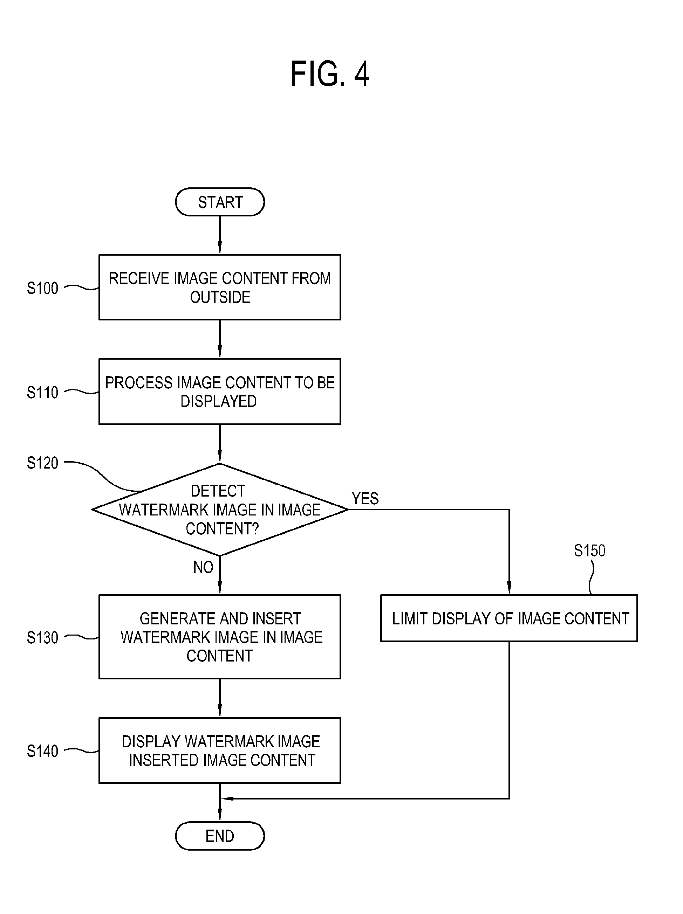

Hereinafter, a control method of the image processing apparatus 1 according to the present exemplary embodiment is described with reference to FIG. 4. FIG. 4 is a flowchart illustrating the control method.

As shown in FIG. 4, when the image receiver 100 receives image content from an outside (S100) (external source), the image processor 200 processes the image content to be displayed (S110).

The watermark detector 500 detects whether the processed image content includes a watermark image, and the controller 600 determines whether there is the watermark image based on a detection result by the watermark detector 500 (S120).

If the watermark image is not detected in the image content, the controller 600 generates and inserts a watermark image with respect to the image content (S130). The image processor 200 displays the watermark image inserted image content (S140).

However, if the watermark image is detected in the image content, the controller 600 limits display of the image content using the various methods described above (S150).

Although the above exemplary embodiment is described with the image processing apparatus 1 including the display unit 300, the concept of the present exemplary embodiment may be applied to an image processing apparatus 2 which does not include the display unit 300.

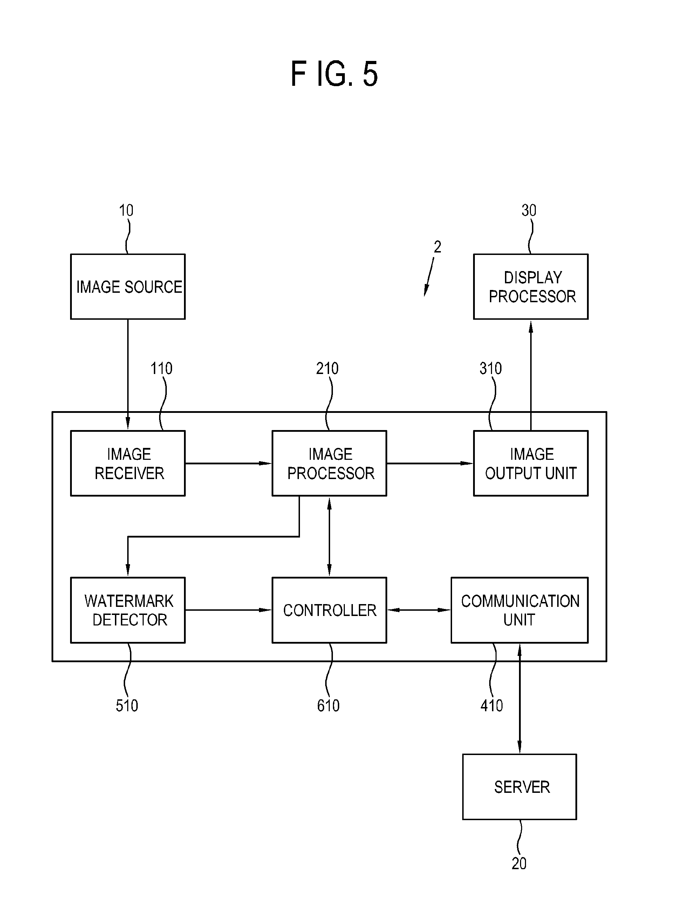

FIG. 5 is a block diagram illustrating a configuration of the image processing apparatus 2 according to a secondary exemplary embodiment.

As shown in FIG. 5, the image processing apparatus 2 according to the secondary exemplary embodiment includes an image receiver 110 to receive image content from an image source 10, an image processor 210 to process the image content received by the image receiver 110, an image output unit 310 to output the image content processed by the image processor 210 to a display apparatus 30 in a wired or wireless manner, a communication unit 400 to communicate with a server 20, a watermark detector 510 to detect a watermark image of the image content, and a controller 610 to perform a different control operation based on a detection result by the watermark detector 510.

The image receiver 110, the image processor 210, the communication unit 410, the watermark detector 510, and the controller 610 of the present exemplary embodiment are substantially the same as those of the first exemplary embodiment, and thus descriptions thereof are omitted for clarity and conciseness.

In the present exemplary embodiment, image content processed by the image processor 210 is output to the display apparatus 30 through the image output unit 310, so that an image of the image content is displayed on the display apparatus 30.

Alternatively, if a watermark image is detected in the image content, output of the image content through the image output unit 310 may be limited by the controller 610, or a warning message image may be output through the image output unit 310 by the controller 610.

Although a few exemplary embodiments have been shown and described, it will be appreciated by those skilled in the art that changes may be made in these exemplary embodiments without departing from the principles of the inventive concept, the scope of which is defined in the appended claims. For example, the above exemplary embodiments are described with a TV as an illustrative example, but the display apparatus of the exemplary embodiments may be configured as a smart phone, a mobile phone, and the like.

## Claims

1. An image processing apparatus comprising:
an image receiver which receives an image content;
an image processor which processes the image content received by the image receiver;
a watermark detector which detects whether the processed image content comprises a watermark image; and
a controller which controls the image processor to selectively limit display of the image content based on whether the watermark image is detected in the image content by the watermark detector.

2. The image processing apparatus of claim 1, wherein the controller controls the image processor to display the image content with a preset watermark image if the watermark image is not detected in the image content by the watermark detector.

3. The image processing apparatus of claim 2, wherein the controller generates the preset watermark image based on a watermark related information comprising at least one of information about details of the image content, information about time and location in which the image content is displayed, and information about the image processing apparatus to process the image content to be displayed.

4. The image processing apparatus of claim 1, wherein the controller controls the image processor not to display the image content on the display unit if the watermark image is detected in the image content by the watermark detector.

5. The image processing apparatus of claim 1, wherein the controller displays a warning message on the display unit if the watermark image is detected in the image content.

6. The image processing apparatus of claim 1, further comprising a communication unit which is connected to a server via a network, wherein the controller extracts watermark related information from the detected watermark image and forwards the extracted watermark related information to the server through the communication unit if the watermark image is detected in the image content by the watermark detector.

7. The image processing apparatus of claim 1, wherein the watermark detector detects the watermark image displayed within an image frame of the image content.

8. The image processing apparatus of claim 7, wherein the controller determines that the image content comprises the watermark image if the watermark detector detects that the image frame comprises at least one preset image pattern.

9. A control method of an image processing apparatus, the control method comprising:
processing a received image content to be displayed;
detecting whether the image content comprises a watermark image; and
selectively limiting display of the image content corresponding to whether the watermark image is detected in the image content.

10. The control method of claim 9, wherein the selectively limiting display of the image content corresponding to whether the watermark image is detected in the image content comprises displaying the image content in order to comprise a preset watermark image if the watermark image is not detected in the image content.

11. The control method of claim 10, wherein the displaying the image content comprising the preset watermark image comprises generating the preset watermark image based on a watermark related information comprising at least one of information about details of the image content, information about a time and a location in which the image content is displayed, and information about the image processing apparatus to process the image content to be displayed.

12. The control method of claim 9, wherein the selectively limiting display of the image content corresponding to whether the watermark image is detected in the image content comprises not displaying the image content if the watermark image is detected in the image content.

13. The control method of claim 9, wherein the selectively limiting display of the image content corresponding to whether the watermark image is detected in the image content comprises displaying a warning message if the watermark image is detected in the image content.

14. The control method of claim 9, wherein the selectively limiting display of the image content corresponding to whether the watermark image is detected in the image content comprises:
extracting watermark related information from the detected watermark image if the watermark image is detected in the image content; and
forwarding the extracted watermark related information to a server.

15. The control method of claim 9, wherein the detecting whether the image content comprises the watermark image comprises detecting the watermark image displayed within an image frame of the image content.
